# EUROPEAN PATENT APPLICATION

(11) **EP 2 230 542 A1**
(43) Date of publication of application: **22.09.2010**
(21) Application number: 09155217.4
(22) Date of filing: 16.03.2009
(51) Int. Cl.: G02B 6/38, G02B 6/42

(54) **Assembly with an optical fiber alignment**

(71) Applicant: Tyco Electronics Nederland B.V., NL-5222 AG's-Hertogenbosch (NL)
(72) Inventor: Jaeger, Peter Dirk, 4271 BP, Dussen (NL); Elenbaas, Jacco, 4794 RP, Heijningen (NL); Duis, Jeroen, 6942 TL, Didam (NL)
(74) Representative: Patentanwaltskanzlei WILHELM & BECK

(57) **Abstract**

The invention refers to an assembly (1) with a support member (2) with a ferrule (3) with an optical fiber (4) embedded in the ferrule (3), the ferrule (3) being fixed to the support member (2), a head of the optical fiber (4) being arranged on the support member (2), with an alignment element (7) that is connected with the support member (2), the head of the fiber (4) abutting on the alignment element (7,25,26,27), whereby the alignment element (7) aligns the head of the optical fiber (4) relative to a predetermined axis (18).

## Description

The invention refers to an assembly with a support member with a ferrule with an optical fiber embedded in the ferrule.

Assemblies with a support member with a ferrule with an optical fiber embedded in the ferrule are an essential part of substantially all optical fiber communication systems. For instance, the assemblies are used as connectors for joining segments of fiber to obtain longer lengths, for connecting fibers to active devices such as radiation sources, detectors and repeaters, and to connect fibers to passive devices such as switches and attenuators.

A basic function of the assembly is to hold an optical fiber in such a way that its core is actually aligned with the optical path of the device to which the optical fiber mates. Thus, the light from the fiber is optimally coupled to the optical path of the related optical device.

For aligning the optical fiber to a predetermined optical path, the ferrule is fixed by a retaining element in a predetermined position. However, this solution is not always sufficient.

US patent US 7,441,963 B2 describes an optical device with a ferrule with an optical fiber with a guide for the fiber, whereby the head of the fiber and the guide comprise conical faces that fit together.

There is a need for an assembly with a ferrule with an optical fiber with an improved alignment of the optical fiber.

The present invention provides an assembly with a support member with a ferrule with an optical fiber that provides a more precise alignment of the optical fiber referring to an optical path.

The guiding face has at least a first section with a conical or tapered shape, whereby the cross-section of the conical shape is narrowing in an insertion direction of a plane face of the head of the fiber. The plane face of the head of the fiber partially abuts on the first section. By providing the conical shape, the head of the fiber can be precisely aligned during the insertion of the plane face of the head of the fiber in the opening.

The more precise alignment is attained by the alignment of the plane face of the head of the fiber by the conical or tapered first section. Thus, a precise alignment of the optical fiber relative to a predetermined axis, i.e. an optical path is achieved. As the optical fiber is aligned with the plane head face, a more precise alignment is attained. By this new approach, deviance between the shape of the first section of the alignment element and the shape of the head of the fiber can be reduced.

Further embodiments of the invention are disclosed in the claims and the description.

A further embodiment comprises rough alignment means that align the ferrule relative to the predetermined axis. The rough alignment means assist the mounting of the ferrule.

Another embodiment refers to rough alignment means with conical faces on the ferrule and the support member that pre-align the optical fiber to the alignment element by mounting the ferrule on the support member. This feature assists the aligning of the fiber and reduces the danger of damaging the fiber during the aligning.

A further embodiment refers to rough alignment means that are constructed as a guiding recess in the support member and as a guiding head of the ferrule that fit together.

Another embodiment refers to rough alignment means that are guiding faces which are arranged on the ferrule and on the support member.

A further embodiment refers to rough alignment means that comprise two pins at a front end of the ferrule which is directed in an insertion direction of the ferrule and two guiding recesses in the support member, whereby the pins are arranged in the respective guiding recesses in an assembled position of the ferrule. This embodiment provides robust alignment means. Furthermore, the two pins protect the head of the fiber at opposite sides. This reduces the danger of damaging the fiber.

A further embodiment refers to an opening that is constructed as a bore being open to a recess at a back side of the support member, whereby an optical member is arranged at least partially in the recess at the back side of the support member. This embodiment provides a compact assembly.

A further embodiment refers to a ferrule that comprises at a head face adjacent to the fiber a recess, whereby the alignment element comprises a protruding part that protrudes in the recess as rough alignment means.

Another embodiment refers to an optical fiber that protrudes with a head section from a head face of the ferrule, whereby the head section of the optical fiber is in contact with the alignment element.

A further embodiment of the assembly comprises a bore with the first section, whereby the bore that is open to a backside of the support member, whereby an optical member is arranged in a recess at a backside of the support member. This arrangement results in a compact assembly.

In a further embodiment of the assembly, the retaining element and the alignment element are constructed in one piece. The one-piece embodiment of the retaining element and the alignment element results in a simple construction of the assembly and a precise orientation of the ferrule and the head of the optical fiber.

A further embodiment of the assembly comprises a ferrule that has a recess adjacent to the fiber at an end face of the ferrule, whereby the alignment element protrudes in the recess of the ferrule. Also, this embodiment provides a compact assembly with simple means for attaining the precise alignment of the head of the optical fiber.

In a further embodiment, the optical fiber protrudes with a head section from an end face of the ferrule, whereby the head section of the optical fiber is in contact with the alignment element. This embodiment can easily be mounted in an opening of the alignment element, whereby the cladding or the core of the fiber abuts at a guiding face of the alignment element. Therefore, it is not necessary to generate a separate guiding face in the ferrule or at the optical fiber. The outer surface of the fiber is used as a guiding face for the alignment of the head of the fiber.

In a further embodiment, the assembly comprises a resilient clamping element that is connected with the support member and that fixes the ferrule in a detachable manner on the support member. The clamping element provides a simple and cheap means for fixing the ferrule.

In a further embodiment, the assembly comprises a housing with a recess with an opening in an upper face of the housing, whereby the ferrule is arranged in the recess of the housing, whereby the ferrule is guided by two opposite faces of the recess, and whereby the alignment element is preferably disposed as a part of the housing.

In a further embodiment, the alignment opening has a circular cross-section that encompasses the head of the optical fiber for aligning the optical fiber according to the predetermined optical path.

The invention is explained considering the following figures:
Figure 1 shows a perspective schematic view of the assembly,
Figure 2 shows a first cross-sectional view of the assembly,
Figure 3 shows a second cross-sectional view of the assembly,
Figure 4 shows a detailed sectional view of the head of the optical fiber of figure 3,
Figure 5 shows a front view of the alignment element,
Figure 6 depicts a backside view of the alignment element,
Figure 7 shows a supporting member with a clamping element,
Figure 8 shows the second embodiment of the assembly with a mounted ferrule with an optical fiber.
Figure 9 shows an assembly tool,
Figure 10 shows the assembly tool with a smaller fiber,
Figure 11 shows a further embodiment of a support member,
Figure 12 shows a further embodiment of a ferrule,
Figure 13 shows a cross-section of a pre-assembled ferrule,
Figure 14 shows a further cross-section of the pre-assembled ferrule,
Figure 15 shows a cross-section of an assembled fiber,
Figure 16 shows a detail of figure 15,
Figure 17 shows a further cross-section of figure 15, and
Figure 18 shows another cross-section of figure 15.

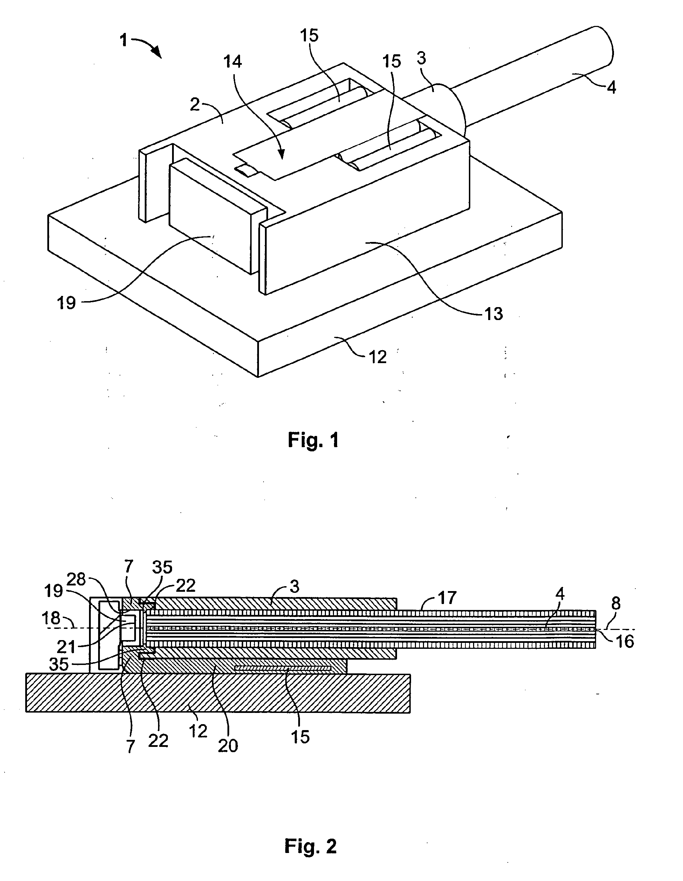

Figure 1 depicts a schematic view of an assembly 1 with a support member 2 and a ferrule 3 with an optical fiber 4. The fiber may be embodied as a single fiber or a multi-fiber. The described embodiment is a multi-fiber 4. Furthermore, an optical member 19 is disposed that is optically connected with the optical fiber 4. The support member 2 comprises a plate 12 with a housing 13 that is arranged on the plate 12. The housing 13 comprises a ferrule recess 14 with an opening at the upper side of the housing 13. The head of the ferrule 3 is disposed in the ferrule recess 14. A clamping element 15 is arranged in the ferrule recess 14 and fixes the ferrule 3 in a detachable manner with the support member 2.

Figure 2 shows a first cross-sectional view of the assembly 1 in a first plane along an x-x section of the longitudinal middle axis of the optical fiber 4 which is perpendicular to the plate 12. The optical fiber 4 comprises a core 16 that is arranged along the longitudinal axis 8 of the fiber 4. In the shown embodiment, the core 16 is realized as a bundle of optical fibers 4. In a further embodiment, the core 16 may be realized as one optical fiber 4. The core 16 is surrounded by a cladding 17 that envelopes the outer face of the core 16. The fiber 4 is embedded with an end section in the ferrule 3. The longitudinal axis 8 is in line with a predetermined optical path 18 of the optical member 19 that is advantageous for an effective optical coupling with the fiber 4.

The housing 13 comprises a base plate 20 that is arranged on the upper face of the plate 12. The base plate 20 is connected with an alignment element 7 that is disposed as a vertical plate. Depending on the used embodiment, the clamping element 15 may be embedded with a base element in the base plate 20.

The alignment element 7 comprises a bore 21, whereby the optical fiber 4 protrudes with a head in the bore 21. Furthermore, a front end of the ferrule 3 comprises an alignment recess 22 adjacent to the surface of the fiber 4. Protruding parts 35 of the alignment element 7 extend in the alignment recess 22 directly abutting at the surface of the cladding 17 or the surface of the core 16.

Furthermore, the optical member 19 is at least partly arranged within an optical member recess 28 of the alignment element 7 at an opposite side compared to the bore 21. The bore 21 passes in the optical member recess 28.

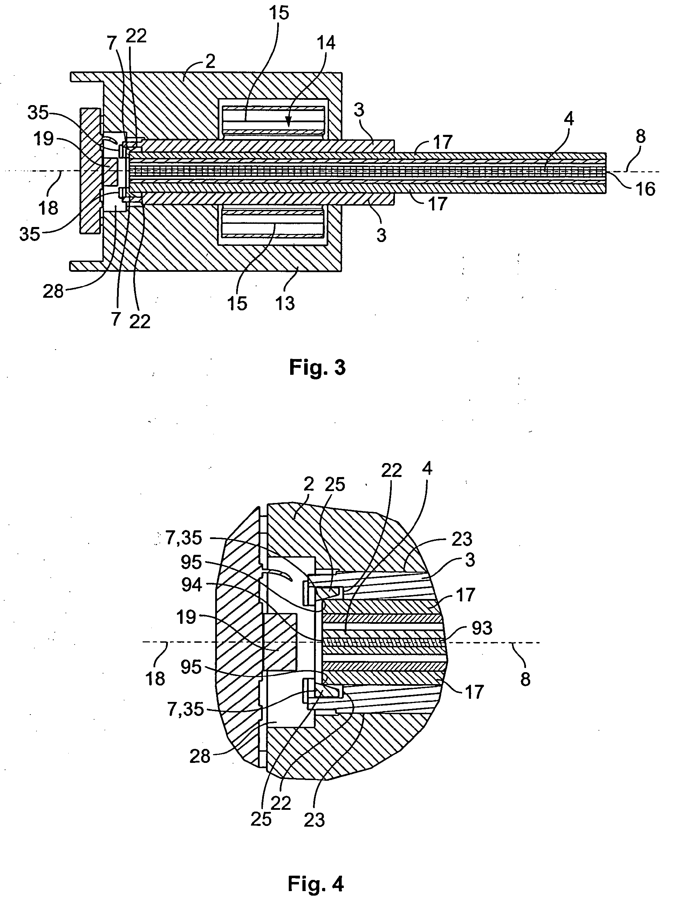

Figure 3 depicts a cross-sectional view of the assembly 1 in a second plane y-y which is in the longitudinal axis 8 and which is parallel to the base plate 20. As can be seen from figure 3, the ferrule 3 is clamped by the clamping element 15 at two opposite sides.

Figure 4 depicts a more detailed cross-sectional view of the end of the ferrule 3 and the head 93 of the fiber 4 of figure 3. The ferrule 3 is aligned by opposite walls 23 of the support member 2. Furthermore, the ferrule 3 comprises the alignment recess 22 adjacent to the fiber 4. In the depicted embodiment, the alignment recess 22 has the shape of a circular ring adjacent to the surface of the cladding 17. The alignment element 7 protrudes with the protruding parts 35 in the alignment recess 22. The protruding parts 35 have in this embodiment the shape of a circular ring. The circular ring 35 of the alignment element 7 encompasses the cladding 17 of the fiber 4. The alignment ring 35 comprises at an inner face a first circular section 25 which has a conical or tapered cross-section along the longitudinal axis 8 of the fiber 4. The cross-section of the first section 25 decreases in the direction to the optical member 19. The fiber 4 has a plane end face 94 that abuts with a circular outer rim 95 at the first section 25. The first section 25 is used for aligning the fiber 4 by introducing the fiber 4 in the bore 21. By introducing the fiber 4 in the bore 21, the head 93 of the fiber 4 is guided by the first section 25. Therefore, the fiber 4 has a very precise position referring to the optical path 18 which is along a middle axis of the bore 21. The optical member 19 is aligned to the optical path 18. The optical member 19 is at least partially arranged in the optical member recess 28 of the alignment element 7 of the support member 2. Thus, a compact assembly is provided.

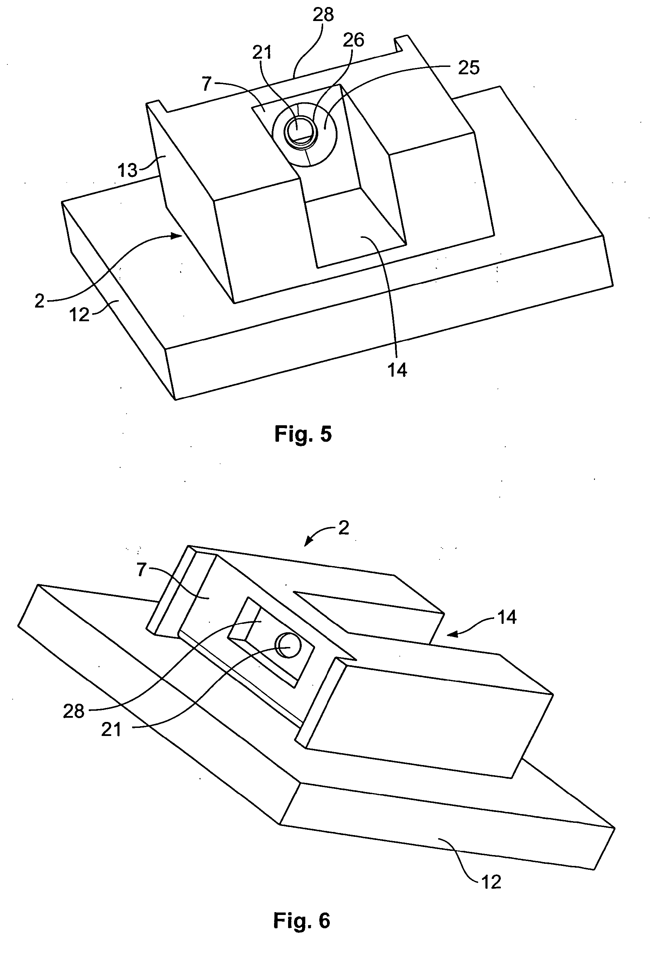

Figure 5 depicts a front view on the alignment element 7 with the bore 21. The bore 21 comprises the first conical section 25. The first section 25 passes over to a second section 26 with a cylindrical shape. The second section 26 surrounds a reduced open diameter of the bore 21 that passes over to the optical member recess 28. Depending on the used embodiment, the first section 25 may be guided through the whole thickness of the alignment element 7 without disposing a second section 26.

Figure 6 depicts a backside of the alignment element 7 with a view on the optical member recess 28 in which the bore 21 passes over.

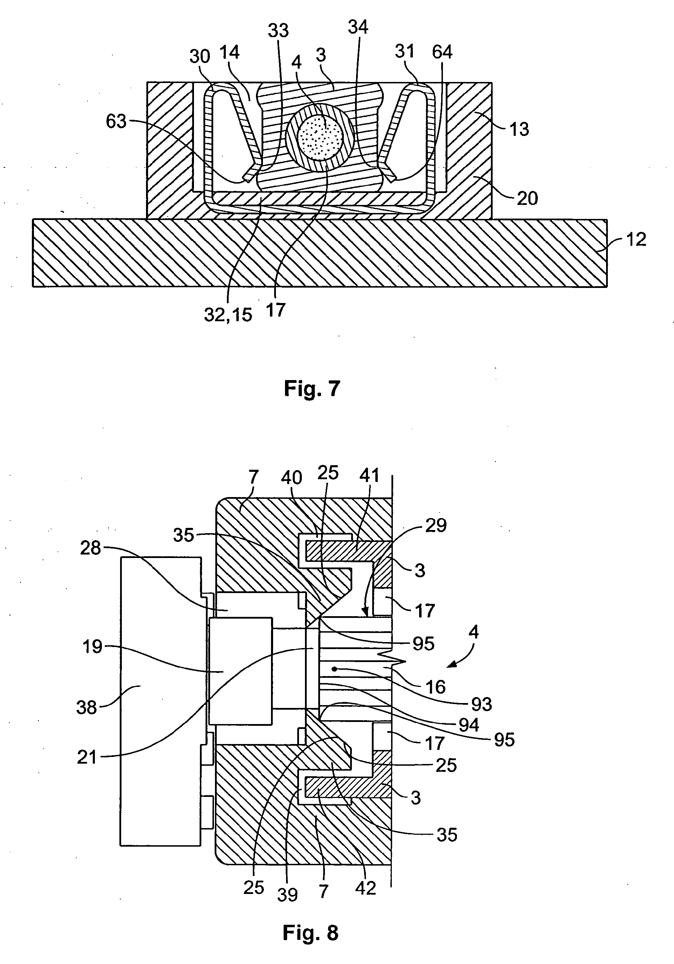

Figure 7 depicts a further cross-sectional view of the assembly 1, whereby the cross-sectional view is arranged perpendicular to the longitudinal axis 8 of the fiber 4 in the region of the clamping element 15. The clamping element 15 basically has a U-shape, whereby two U-shaped arms 30, 31 are connected by a middle section 32. The middle section 32 is arranged in the base plate 20 or connected with the base plate 20. At two opposite sides of the middle section 32, a first and second U-shaped arm 30, 31 is connected with a middle section 32. A first part of the first and the second arm 30, 31 is arranged perpendicular to the middle section 32 and guided up to a plane in a region of an upper face of the support member 2. Starting from the plane, the two opposite arms 30, 31 are bent back to the middle section 32 in the direction of the middle section 32. Endings 63, 64 of the two arms 30, 31 are bent back to the outer part of the U-shaped first and the second arm 30, 31.

The ferrule 3 basically comprises a cross-sectional shape of a rectangle, whereby at two opposite side walls inclined faces 33, 34 are disposed in the lower section of the side walls. The inclined faces 33, 34 are inclined outwards in the direction of a bottom of the ferrule that rests on the base plate 20. The bent endings 63, 64 of the first and the second arm 30, 31 are pressed against the first and the second inclined face 33, 34, respectively. Thus, it is possible by using the clamping element 15 to press the ferrule 3 on the base plate 20 of the support member 2. This provides a strong fixation of the ferrule 3 and due to the shape of the arms 30, 31 with the bent endings 63, 64 an easy mounting of the ferrule 3.

Figure 8 shows a further sectional view of an embodiment in an x-plane. In this shown embodiment, a front end of the ferrule 3 projects with a first and a second projection part 41, 42 beyond the front face of the head 93 of the fiber 4. The alignment element 7 comprises a first and a second recess 39, 40 which are arranged to receive the first and the second projection part 41, 42 of the ferrule 3. During the assembling of the fiber 4, the first and the second projection part 41, 42 are moved in the first and the second recess 39, 40, resulting in a rough alignment of the ferrule 3. This rough alignment results in a pre-alignment of a head 93 of the fiber 4 within the first conical section 25. The head 93 of the fiber 4 comprises a plane end face 94 that abuts with at least a part of a circular rim 95, on the first section 25. The first section 25 is shaped as a tapered or conical section as explained with reference to figure 5. Depending on the used embodiment, it is not necessary that the whole end face of the head of the fiber is a plane face. For a precise alignment it might be sufficient if at least an outer rim 95 of the end face 94 of the head 93 of the fiber 4 is a plane ring face. During the insertion of the fiber 4 in the bore 21, the fiber 4 is aligned by the first section 25 and abutting in an end position on the first section 25. Using the rough alignment by the first and the second recess 39, 40 of the alignment element 7 with the first and the second projection parts 42, 41 of the ferrule 3 reduces the danger of damaging the sensitive head of the fiber 4. The fiber 4 is constructed as a multi-fiber with several single fibers within the fiber 4. The fiber 4 is aligned by the surface of the fiber 4, whereby the cladding 17 is stripped off in an end section 29 of the head of the fiber 4.

The optical member 19 is arranged within the optical member recess 28, whereby the optical member 19 is fixed on a printed circuit board 38 which is adjacent at a backside of the alignment element 7. The optical member 19 is for example a laser diode, preferably a vertical cavity surface emitting laser diode. Depending on the used embodiment, the optical member 19 could also be an optical sensor or an optical connector element or an optical guiding element, such as an optical fiber.

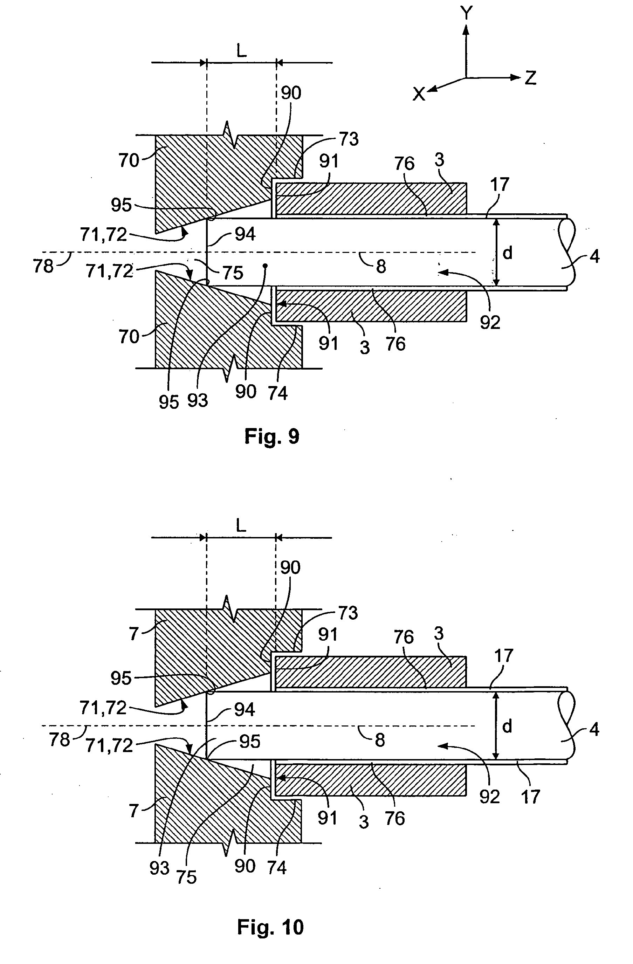

Figure 9 shows a schematic cross-sectional view in the x-plane along a z-axis of an assembly tool 70 with an alignment face 71 with the shape of a bore 75 with a conical or tapered section 72. The conical or tapered section 72 preferably has the same shape and the same size as the first section 25 of the alignment element 7. The ferrule 3 is aligned by assembly faces 73, 74, that encompass the ferrule 3 in a front end section. Furthermore, the ferrule 3 is pushed with a second stop shoulder 91 against a first stop shoulder 90 of the assembly tool defining a predetermined distance between the section 72 and a front of the ferrule 3. The predetermined distance is the same distance which the mounted ferrule 3 has in the mounted position with respect to the first section 25 of the alignment element 7. Therefore, the ferrule is aligned in parallel to a middle axis 78 of the bore 75 of the alignment tool. The fiber 4 is pushed from a back side through an opening 92 of the ferrule 3 towards the assembly tool 70. The fiber 4 is aligned by the alignment face 71, whereby an outer rim 95 of a plane end face 94 of the head 93 of the fiber 4 abuts at the conical or tapered section 72. The fiber 4 is not yet fixed with the ferrule 3 and can be moved along the z-axis in the opening 92 of the ferrule. Following the alignment of the fiber 4 in the assembly tool 70, the fiber 4 is fixed to the ferrule 3, e.g. by means of a glue 76 or by means of welding. This assembling method has the advantage that the head of the fiber 4 projects at a predetermined distance from a front of the ferrule 3 to get into contact with the section 72. The alignment tool 70 has the advantage that the mounting of the fiber 4 is carried out precisely since the plane end face of the head 93 of the fiber 4 abuts against the conical section 72. Therefore, the longitudinal axis 8 of the fiber is in line with the middle axis 78, whereby the conical section 72 is arranged symmetrically to the middle axis. The fiber 4 is a single fiber or a bundle of fibers.

Figure 10 depicts a cross-sectional view in the x-plane of the assembly tool 70 with a ferrule 3 and a fiber 4 with a smaller diameter compared to the fiber 4 of figure 9. Because of the smaller diameter of the fiber 4, the fiber 4 is introduced with a greater length L in the bore 75 of the alignment tool 70. Also in this embodiment, the fiber 4 abuts against the conical section 72 of the bore 75 with a rim 95 of the plane end face 94 of the head 93. The advantage of using a conical section 72 for aligning the length of the distance L that protrudes the head 93 of the fiber 4 from the ferrule 3 is that there is a precise alignment of the longitudinal middle axis 8 of the fiber 4 with respect to the middle axis 78 that represents a predetermined optical path 18. By using the assembly tool 70, a ferrule 3 with an aligned mounted fiber 4 is attained. The head 93 of the fiber 4 projects from the front of the ferrule 3 with a predetermined distance L that depends on the diameter of the fiber 4. The distance L is determined by the assembly tool 70 in such a way that the plane end face 94 of the head 93 of the fiber 4 abuts on the first section 25 of the alignment element 7 if the ferrule 3 is mounted on the support member 2. The diameter d of the fiber in Figure 9 is greater than the diameter of the fiber in Figure 10. Therefore, the mounted fiber of Figure 9 projects from the end of the ferrule 3 with a smaller distance L than the fiber 4 of Figure 10.

Tests have shown that it is more important to have a precise alignment in the y- and/or x-direction than in the z-direction. The position of the head 93 of the fiber 4 along the z-direction of the optical path 18 is not so important for an optimal coupling between the fiber 4 and the optical member 19, whereby the head 93 of the fiber 4 has to abut on the conical first section 25. The necessary projecting length of the fiber 4 is preferably adjusted in a predetermined range with the alignment tool 70.

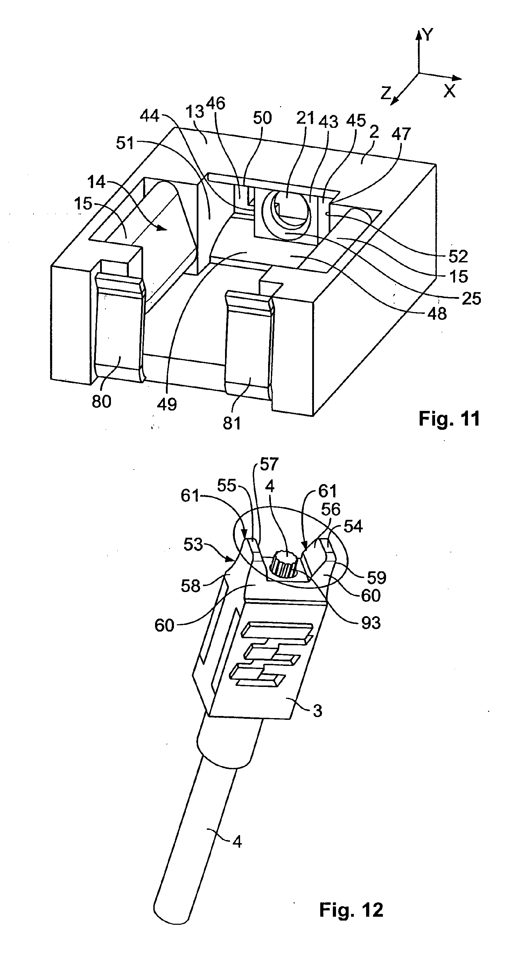

Figure 11 shows a further embodiment of a support member 2. The support member 2 comprises a housing 13 with a ferrule recess 14. In a front side of the housing 13, the bore 21 is disposed in a projecting block 43. The bore 21 comprises a first conical section 25. Depending on the used embodiment, there may also be a second section as explained with the embodiment of figure 5. However, in the depicted embodiment, there is only a conical first section 25. The projecting block 43 comprises at two opposite outer sides a first and a second guiding face 44, 45. The first and the second guiding face 44, 45 define a conical or tapered section of the projecting block 43. The width of the projecting block 43 increases in the insertion direction of the fiber 4, i.e. the z-direction. The first and the second guiding face 44, 45 confine a first and a second guiding recess 46, 47 which are disposed at opposite sides of the projecting block 43. The projecting block 43 is disposed in a third guiding recess 48 of a front section of the housing 13. The third guiding recess 48 is confined by two opposite faces 49, 50 which confine an upper and a lower side of a conical or tapered section of the third guiding recess 48 and an upper and a lower side of a conical or tapered section of the first and the second guiding recesses 46, 47. The first and the second conical faces 49, 50 are arranged perpendicular to the first and the second guiding faces 44, 45 and extend into the first and the second guiding recesses 46, 47. The side faces of the third guiding recess 48 are confined by a third and a fourth side face 51, 52.

The third guiding recess 48 is arranged adjacent to the ferrule recess 14. The third guiding recess 48 passes over in the first and the second guiding recess 46, 47 at two opposite sides of the projecting block 43. The first and the second conical faces 49, 50 and the first guiding face 44 and the second guiding face 45 dispose first rough alignment means for attaining a rough alignment of the ferrule 3. The third guiding recess 48 comprises a conical or tapered shape in the y-plane, whereby the width of the guiding recess 48 decreases in the insertion direction of the fiber 4. The first and second guiding recesses 46, 47 comprise a conical or tapered shape in the x-plane, whereby the widths of the first and second guiding recesses decrease in the insertion direction of the fiber 4, i.e. the z-direction. The support member 2 comprises a second and a third spring 80, 81 which may be used for biasing the ferrule 3 and the fiber 4 in the direction of the alignment element 7. By means of the second and the third spring, the fiber 4 may be pushed on the first conical section 25, thus achieving a precise alignment of the fiber 4 in the z-plane referring to an optical path 18. Depending on the used embodiment, the second and the third spring 80, 81 may be omitted because the position of the ferrule 3 may be fixed by the clamping element 15. The third guiding recess 48 passes over to the first and second guiding recess 46, 47.

Figure 12 shows a ferrule 3 with an alignment head 53 with second rough alignment means. The alignment head 53 is arranged at a front side of the ferrule 3 and comprises in a center the head 93 of the fiber 4. At opposite sides with respect to the fiber 4, there are two pins 54, 55 which are used for a rough alignment of the ferrule 3 during the insertion in the support member 2. The first and the second pin 54, 55 project from the center of the ferrule 3 at a larger distance than the fiber 4. Thus, the first and second pin 54, 55 protect the head 93 of the fiber 4 along the whole length. The first and the second pin 54, 55 comprise inner inclined faces 56, 57 which are arranged as outwards inclined faces with respect to the direction of the head of the fiber 4 defining a conical or tapered space between the inner faces 56, 57. The first and second inner faces 56, 57 cover the whole width of the respective first and second pin 54, 55. At opposite sides to the inner faces 56, 57, there are outer faces 58, 59 that confine the first and the second pin 54, 55. The outer faces 58, 59 are extended side faces of the ferrule 3. The ferrule 3 has basically the shape of a cuboid with two parallel side faces, two parallel upper and lower faces, a back face and a front face, whereby at the front face of the ferrule 3, the first and the second pin 54, 55 are disposed. The first and the second pin 54, 55 extend from the front face of the alignment head 53 in the longitudinal axis of the fiber 4.

The first and the second pin 54, 55 dispose an upper and a lower side face 60, 61. The opposite upper and lower side faces 60, 61 of the first and the second pin 54, 55 are inclined to each other in the direction of the head of the fiber 4, thus providing a conical shape of the first and the second pin 54, 55.

By inserting the ferrule 3 in the support member 2, the first and the second pin 54, 55 are moved through the third guiding recess 48 in the first and respectively the second guiding recess 46, 47. The upper side faces 60 and the lower side faces 61 are guided by the first conical face 49 and the second conical face 50. The first outer face 58 and the second outer face 59 of the pins 54, 55 are guided by the third and the fourth side face 51, 52. Additionally, the first inner face 56 of the first pin 54 and the second inner face 57 of the second pin 55 are guided by the first guiding face 44 and the second guiding face 45 of the projecting block 43. The design of the front head 53 of the ferrule 3 and the design of the third, second and first guiding recesses 48, 47, 46 provide a first and a second rough alignment means during the insertion of the ferrule 3 in the support member 2 resulting in rough pre-alignment of the fiber 4 with respect to a z-plane of the first section 25.

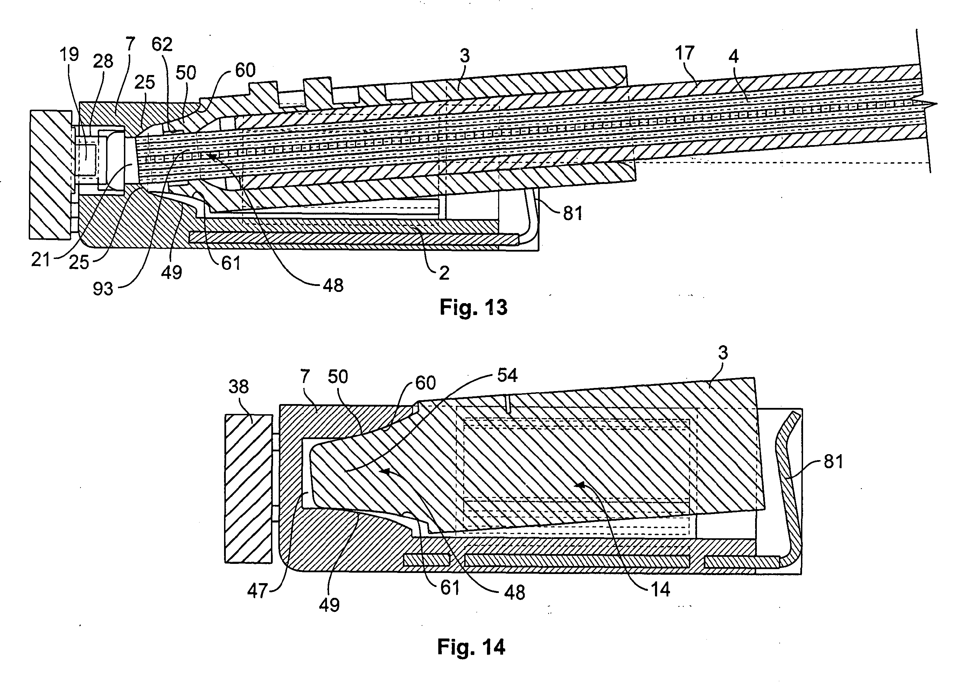

Figure 13 shows a cross-sectional view in the x-plane through the middle longitudinal axis 8 of the fiber 4 and the ferrule 3 in a pre-mounting position in the support member 2. The ferrule 3 is a pre-mounted position, whereby the ferrule 3 is pre-aligned by the first and the second conical face 49, 50 and the first and the second guiding face 44, 45 (not shown). The first and second conical faces 49, 50 define a conical or tapered section of the third guiding recess 48 and the first guiding recess 46. In this position, the fiber 4 is pre-aligned for the insertion in the first section 25, as shown. Depending on the embodiment, the bore 21 may comprise only a first conical section 25. The pre-alignment of the ferrule 3 reduces the danger of damaging the fiber 4 by inserting the ferrule 3 in the support member 2. In the embodiment shown in figure 13, the ferrule 3 is fixed on the cladding 17, whereby the fiber 4 extends beyond the cladding 17 and extends beyond the front head of the ferrule 3 as shown in figure 12. The ferrule 3 comprises at the front head 93 a circumventing recess 62 which surrounds the fiber 4 and which allows a more flexible bending of the fiber 4 which is useful for a precise alignment during the insertion in the bore 21.

Figure 14 shows a cross-sectional view in an x-plane of the first pin 54 of the pre-assembled ferrule 3. The first pin 54 is arranged in the second guiding recess 47, whereby the upper and the lower side faces 60, 61 of the first pin 54 are guided by the first and the second conical faces 49, 50 defining conical or tapered sections of the third and the first guiding recess 48, 46 in the x-plane.

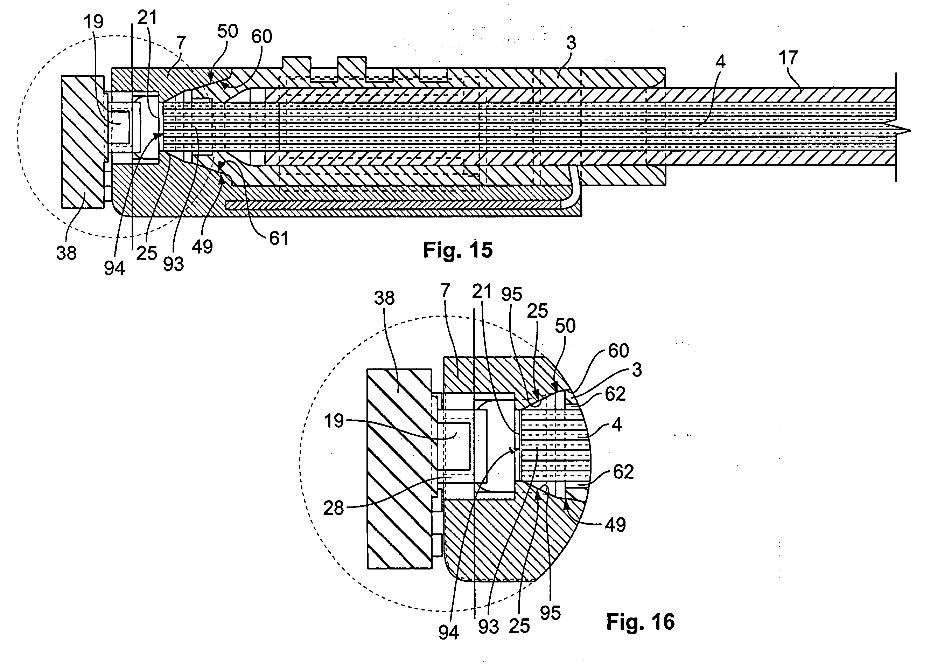

Figure 15 depicts a cross-sectional view in the x-plane of a ferrule 3 with a fiber 4 which is inserted in an end position. The upper side face 60 and the lower side face 61 of the first and the second pin 54, 55 abut against the first and the second conical face 49, 50. The fiber 4 is in a mounted position, whereby the end face 94 of the head 93 of the fiber 4 is arranged in the first conical section 25 of the bore 21. The shown embodiment depicts a bundle of fibers 4, whereby each fiber 4 comprise a head 93 with a plane end face 94 which define a common plane end face of the bundle of fibers.

Figure 16 depicts a detail of the end face 94 of the fiber 4 and the end face of the ferrule 3. The end face of the ferrule 3 is disposed in the third guiding recess 48 and with the first and the second pin 54, 55 and the first and the second guiding recess 46, 47. The end face 94 of the head 93 of the fiber 4 is arranged in the area of the first section 25. The plane end face 94 of the head 93 of the bundle of fibers 4 abuts on the first section 25 with an outer rim 95 of the plane end face 94 of the heads of the bundle of fibers 4. The outer rim 95 has a circular shape. The bundle of fibers may be constructed as a multicore polymer optical fiber.

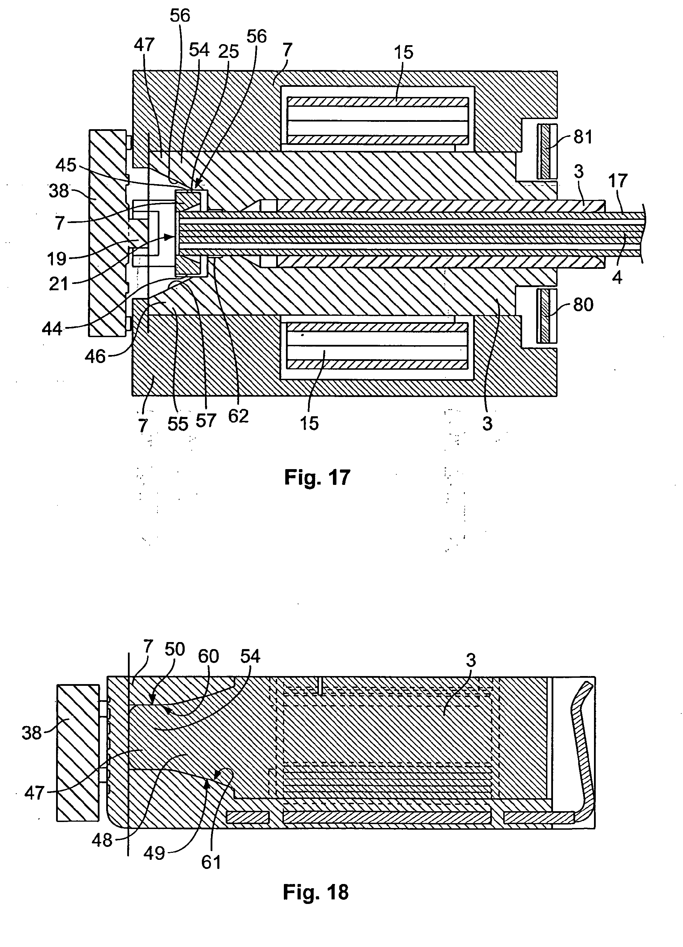

Figure 17 shows a cross-sectional view according to a y-plane which is arranged in parallel to the ground plate of the support member 2 and through the middle longitudinal axis 8 of the fiber 4. The first and the second pin 54, 55 extend in the first and the second guiding recess 46, 47. Furthermore, the first inner face 56 and the second inner face 57 of the first and, respectively of the second pin 54, 55 lie at the first guiding face 44 and respectively at the second guiding face 45. Figure 17 shows a cross-sectional view of figure 15.

Figure 18 shows a further cross-sectional view in a second x-plane through the first pin 54. The depicted first pin 45 lies with the upper side face 60 and the lower side face 61 against the first and the second guiding face 49, 50 of the second guiding recess 47.

Depending on the used embodiment, also one pin 54, 55 might be sufficient for attaining a rough alignment of the fiber 4 by the ferrule 3. Furthermore, the guiding faces might have different orientations or different shapes, whereby the function of a pre-alignment of the fiber 4 by using the ferrule 3 is also attained.

Furthermore, the first section 25 may not precisely show a conical shape, but may have a tapered shape with a circular cross-sectional face.

In a further embodiment, the position of the guiding faces may also be behind the end section 29 of the fiber 4. Additionally, the pre-alignment of the ferrule 3 may also be attained by guiding faces at the side faces and the upper and the lower faces of the cuboid section of the ferrule 3.

## Claims

1. Assembly (1) with a support member (2) with a ferrule (3) with an optical fiber (4) embedded in the ferrule (3), the ferrule (3) being fixed to the support member (2), with
an alignment element (7) that is connected with the support member (2), a head (93) of the fiber (4) abutting on the alignment element (7,25,26), whereby the alignment element (7) aligns the head of the optical fiber (4) relative to a predetermined axis (18), whereby the alignment element (7) comprises an opening (21) with a guiding face (25), whereby the guiding face has at least a first section (25) with a tapered shape, whereby the cross section of the tapered shape is narrowing in an inserting direction of the head (93) of the fiber (4), whereby a plane end face (94) of the head (93) of the fiber (4) abuts at least partially on the first section (25).

2. Assembly of claim 1, wherein alignment means (46,47,54,55) are disposed that align the ferrule (3) relative to the predetermined axis (18).

3. Assembly of claim 2, wherein the alignment means (46, 47, 54, 55) are provided on the ferrule (3) and the support member (2) to align the optical fiber (4) to the alignment element (7,25) by mounting the ferrule (3) on the support member (4).

4. Assembly of claim 2 or 3, wherein the alignment means (46, 47, 54, 55) align the ferrule (3) relative to a plane perpendicular to the predetermined axis (18).

5. Assembly of any of the claims 2 to 4, wherein the alignment means (46, 47, 54, 55) are constructed as a guiding recess (46,47) in the support member (2) and as a guiding head (53) of the ferrule (3) that fit together.

6. Assembly of any of the claims 2 to 5, wherein the alignment means are guiding faces (56,57,60,61) that are arranged on the ferrule (3) and guiding faces (44,45,49,50) that are arranged on the support member (2).

7. Assembly of any of the claims 2 to 6, wherein the alignment means comprise two pins (54,55) at a front head (53) of the ferrule (3) which are directed in an insertion direction of the fiber (4) and two guiding recesses (46,47) in the support member (2), whereby the pins (54,55) are arranged in the respective guiding recesses (46,47) in an assembled position of the ferrule (3).

8. Assembly of any one of claims 1 to 7, whereby the opening is a bore (21) which is open to a recess (28) in a back side of the support member (2), whereby an optical member (19) is at least partially arranged in the recess (28) at the back side of the support member (2).

9. Assembly of any of the claims 1 to 8, wherein the ferrule (3) comprises at a head face adjacent to the fiber (4) a recess (62) , whereby the alignment element (7) comprises a protruding part (35) that protrudes in the recess (62) as a rough alignment means for the ferrule (3).

10. Assembly of any of the claims 1 to 9, wherein a head (94) of the optical fiber (4) protrudes from a head (53) of the ferrule (3), whereby the head (53) of the ferrule comprises at least one protruding part (54, 55) that protects the fiber (4) at one side.

11. Assembly according to any of the preceding claims, whereby the support member (2) comprises a housing (13) with a recess (14) with an opening in an upper face of the housing (13), whereby the ferrule (3) is arranged in the recess (14) of the housing (13), whereby the ferrule (3) is guided by two opposite walls (23) of the recess (14).

12. Assembly according to any one of the preceding claims, whereby a bundle of fibers (4) is disposed, whereby the bundle of heads (94) of fibers (4) define a plane end face (93), whereby the plane end face (93) of the bundle of fibers (4) abuts at least partially with an outer rim (95) on the first section (25).

13. Assembly according to any of one of the preceding claims, whereby the alignment element (7) comprises at least one guiding recess (46,47,48) with a conical or tapered shape in an insertion direction of the fiber (4), whereby a part of the ferrule (3) projects in the guiding recess (46,47,48), whereby the ferrule (3) is aligned by the guiding recess with respect to one or two perpendicular axes.

14. Assembly of claim 13, whereby two guiding recesses are disposed in the alignment element (7) at opposite sides of the opening (21) receiving two projecting parts (54,55) of the ferrule (3).

15. Assembly of claim 13, whereby a third guiding recess is arranged in the alignment element (7), whereby the third guiding recess (48) is in the insertion direction in front of the two guiding recesses (46,47) and passes over to the two guiding recesses.
